(19) Europäisches Patentamt
European Patent Office
Office européen des brevets

(11) **EP 4 227 891 B1**

(12) **EUROPEAN PATENT SPECIFICATION**

(45) Date of publication and mention
of the grant of the patent:
**29.04.2026 Bulletin 2026/18**

(21) Application number: **20956962.3**

(22) Date of filing: **12.10.2020**

(51) International Patent Classification (IPC):
$G06T\ 7/00^{(2017.01)}$    $G06T\ 5/60^{(2024.01)}$
$G06T\ 5/70^{(2024.01)}$    $G05B\ 13/02^{(2006.01)}$
$G06N\ 3/044^{(2023.01)}$    $G06N\ 3/09^{(2023.01)}$
$G06N\ 7/01^{(2023.01)}$

(52) Cooperative Patent Classification (CPC):
**G06T 5/70; G05B 13/027; G06N 3/044; G06N 3/09;
G06N 7/01; G06T 5/60;** G06T 2207/20081;
G06T 2207/20084

(86) International application number:
**PCT/CN2020/120476**

(87) International publication number:
**WO 2022/077180 (21.04.2022 Gazette 2022/16)**

(54) **METHOD, APPARATUS AND SYSTEM FOR DETERMINING MODEL PARAMETERS OF
UNSCENTED KALMAN FILTER**

VERFAHREN, VORRICHTUNG UND SYSTEM ZUR BESTIMMUNG VON MODELLPARAMETERN
EINES NICHT ZENTRIIERTEN KALMAN-FILTERS

PROCÉDÉ, APPAREIL ET SYSTÈME POUR DÉTERMINER DES PARAMÈTRES DE MODÈLE D'UN
FILTRE DE KALMAN INODORE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.08.2023 Bulletin 2023/33**

(73) Proprietor: **Siemens Ltd., China
Chaoyang District
Beijing 100102 (CN)**

(72) Inventors:
• **FENG, Cheng
310021 Hangzhou (CN)**
• **SCHNEEGASS, Daniel
80637 München (DE)**
• **TIAN, Pengwei
Beijing 100102 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
CN-A- 108 682 023    CN-A- 108 682 023
CN-A- 109 472 418    CN-A- 111 208 438

• RAHIMI AFSHIN ET AL: "Fault Isolation of
Reaction Wheels for Satellite Attitude Control",
IEEE TRANSACTIONS ON AEROSPACE AND
ELECTRONIC SYSTEMS, IEEE SERVICE
CENTER, PISCATAWAY, NJ, US, vol. 56, no. 1, 9
October 2019 (2019-10-09), pages 610 - 629,
XP011771388, ISSN: 0018-9251, [retrieved on
20200206], DOI: 10.1109/TAES.2019.2946665
• RONGHUI ZHAN ET AL.: "Neural Network-Aided
Adaptive Unscented Kalman Filter for Nonlinear
State Estimation", IEEE SIGNAL PROCESSING
LETTERS, vol. 13, no. 7, 31 July 2006
(2006-07-31), pages 445 - 448, XP055843790, DOI:
10.1109/LSP.2006.871854

## Description

## Technical Field

The present invention relates to the field of data filtering technologies, and in particular, to a method, apparatus and system for determining a model parameter of an unscented Kalman filter.

## Background Art

Due to a noise characteristic of sensor measurement, a Kalman filter (KF) and its variants are widely used for status monitoring processing in an application environment such as an industrial control system (ICS). In particular, an original version of the Kalman filter is generally applied to a linear dynamic state-space model, to monitor a status of a physical process under noise sensor measurement. For systems with nonlinear process dynamics, an extended Kalman filter (EKF) and an unscented Kalman filter (UKF) are two common choices. In practice, the UKF is easier to implement and generally has higher accuracy than the EKF.

Despite the wide acceptance of the UKF, the design of the UKF is still quite challenging in practice. Specifically, to apply the UKF, a system identification step is first required to establish a mathematical model of process dynamics, that is, to design a state transition function as one of the model parameters of the UKF. However, for a system with highly nonlinear process dynamics, this step is generally very difficult or even infeasible, which significantly reduces the usability of the UKF.

In addition, a high level of professional knowledge in system dynamics and sensor knowledge is required to specify, in a state-space model, a process noise matrix and a measurement noise matrix that are also model parameters of the UKF. As a result, these two matrices are usually not designed correctly, resulting in a poor model design of the UKF.

CN 108682023 A relates to tightly coupled unscented Kalman tracking filtering algorithm based on an Elman neural network.

## Summary of the Invention

Implementations of the present invention propose a method, apparatus and storage medium for determining a model parameter of a UKF.

Aspects of this invention are defined in the claims.

It can be learned that, in the implementations of the present invention, there is no need to establish a mathematical model of process dynamics, a noise distribution of a sensor and denoised detection data are determined based on detection data of the sensor, and a neural network model specialized in capturing nonlinear process dynamics is trained based on the denoised detection data, so that a state transition function of a UKF can be automatically learned from the detection data, thereby improving the usability of the UKF.

For any one of the above aspects, the following steps are further included: determining, as a process noise matrix of the UKF, a distribution of a residual, between a predicted value of the sensor and a detection value of the sensor, output by the trained neural network model; and determining, as a measurement noise matrix of the UKF, a diagonal matrix formed by an arrangement of variances of the noise distribution.

It can be learned that, in the implementations of the present invention, the process noise matrix and the measurement noise matrix of the UKF are quickly calculated based on the noise distribution and the distribution of a residual, between a predicted value and a detection value, output by the trained neural network model, so that there is no need to manually specify the process noise matrix and the measurement noise matrix, thereby avoiding a dependence on professional knowledge and further improving the usability of the UKF.

For any one of the above aspects, determining a noise distribution of the sensor and denoised detection data based on the detection data includes: setting an original value of the denoised detection data; and performing an iterative calculation on the noise distribution of the sensor and the denoised detection data based on the original value of the denoised detection data and the detection data, where each iteration includes: determining a current iteration value of the noise distribution of the sensor based on a previous iteration value of the denoised detection data and the detection data; determining a current iteration value of the denoised detection data based on the current iteration value of the noise distribution of the sensor and the detection data; and updating the previous iteration value of the denoised detection data based on the current iteration value of the denoised detection data.

Therefore, in the implementations of the present invention, the noise distribution of the sensor and the denoised detection data can be quickly and accurately determined through iterative calculation.

For any one of the above aspects, preferably, the method is applied to an industrial control system including an actuator, and further includes: obtaining status data of the actuator in the industrial control system; and training a neural network model based on the denoised detection data includes: training the neural network model by using the denoised detection data and the status data as training data.

Therefore, in the implementations of the present invention, the status data of the actuator are further obtained, and the status data of the actuator are further used as training data to train the neural network model, so that the accuracy of the neural network model can be improved, which is especially applicable to an ICS generally including a sensor and an actuator.

**Brief Description of the Drawings**

FIG. 1 is an exemplary flowchart of a method for determining a model parameter of a UKF according to an implementation of the present invention.

FIG. 2 is an exemplary structural diagram of a system for determining a model parameter of a UKF according to an implementation of the present invention.

FIG. 3 is an exemplary structural diagram of an ICS according to an implementation of the present invention.

FIG. 4 is an exemplary schematic diagram of an ICS including a UKF according to an implementation of the present invention.

FIG. 5 is a first diagram showing a comparison between a simulation effect in the prior art and an effect according to an implementation of the present invention.

FIG. 6 is a second diagram showing a comparison between a simulation effect in the prior art and an effect according to an implementation of the present invention.

FIG. 7 is a first exemplary structural diagram of an apparatus for determining a model parameter of a UKF according to an implementation of the present invention.

FIG. 8 is a second exemplary structural diagram of an apparatus for determining a model parameter of a UKF according to an implementation of the present invention.

Reference signs in the accompanying drawings are as follows:

| Reference sign | Meaning |
|---|---|
| 100 | Method for determining a model parameter of a UKF |
| 101-104 | Steps |
| 20 | System for determining a model parameter of a UKF |
| 21 | Memory |
| 22 | Processor |
| 23 | Bus |
| 301 | Supervisory control layer |
| 302 | SCADA, HMI, an engineering workstation, and a data history recorder component |
| 303 | Control layer |
| 304 | PLC, RTU |
| 305 | Sensor |
| 306 | Actuator |
| 307 | Physical layer |
| 30 | ICS |
| 31 | First interface |

(continued)

| Reference sign | Meaning |
| --- | --- |
| 32 | Second interface |
| 33 | UKF |
| 34 | Bus |
| 35 | Detection data |
| 36 | Status data |
| 37 | Denoised detection data |
| 51 | Simulation curve of a UKF based on an RNN |
| 52 | Simulation curve of a UKF based on an FNN |
| 53 | Simulation curve of a model based on an RNN residual |
| 54 | Simulation curve of a model based on an FNN residual |
| 61 | Simulation curve of a UKF based on an RNN |
| 62 | Simulation curve of a model based on an RNN residual |
| 63 | Simulation curve of a UKF based on an FNN |
| 64 | Simulation curve of a model based on an FNN residual |
| 700 | Apparatus for determining a model parameter of a UKF |
| 701 | Data obtaining module |
| 702 | First determining module |
| 703 | Training module |
| 704 | Second determining module |
| 705 | Third determining module |
| 800 | Apparatus for determining a model parameter of a UKF |
| 801 | Processor |
| 802 | Memory |

## Detailed Description of Embodiments

In order to make the technical solution and advantages of the present invention clearer, the present invention is further illustrated in detail below in conjunction with the accompanying drawings and implementations. It should be understood that the specific implementations described herein are merely used for illustratively describing the present invention, but do not limit the scope of protection of the present invention.

In order to be concise and intuitive in description, the solution of the present invention is explained by describing several exemplary implementations below. A large number of details in the implementations are merely used to help understand the solution of the present invention. However, it is obvious that the implementation of the technical solution of the present invention may not be limited to these details. In order to avoid obscuring the solution of the present invention unnecessarily, some implementations are not described in detail, but merely a framework is given out. Hereinafter, "comprising" means "comprising but not limited to", and "according to... " means "at least according to... , but not limited to merely according to...". Due to the language habits of Chinese, when the number of a component is not specified in the following, it means that the number of the component may be one or more, or may be understood as at least one.

So far, most status monitoring mechanisms in ICSs rely on a prediction model. This model predicts a sensor measurement value within each time step based on a previous sensor measurement value and actuator state, and if a residual error between the predicted measurement value and an observed value exceeds a specific threshold, an alarm will be issued. Basic prediction models may have a plurality of different forms, including, for example, an autoregressive (AR) model, a linear dynamic state-space model, and another regression model based on a deep neural network. However, all prediction models may be expressed as a higher-order function:

$$\hat{z}^t = f(z^{\{t-w:t-1\}}, u^{\{t-w:t-1\}}; \theta)$$

where $z^{\{t\text{-}w:t\text{-}1\}}, u^{\{t\text{-}w:t\text{-}1\}}$ are model inputs respectively representing a sensor measurement value and an actuator state within first w time steps; $\hat{z}^t$ is a model output representing a predicted sensor measurement value within a current time step; and $\theta$ is a parameter to be estimated, for example, by minimizing a mean square error between the predicted sensor measurement value and an actual value in the case of a given time-series data log (composed of a sensor measurement value and an actuator state in an ICS). According to the prediction of the model, when a Euclidean distance between the predicted sensor measurement value and an observed value exceeds a specific threshold ($\|\hat{z}^t \text{-} z^t\| > \tau$), an alarm will be issued.

A nonlinear state-space model and a UKF are described:

Without loss of generality, an ICS having $M$ physical processes is considered, and these physical processes are monitored by $N$ sensors and K actuators. It is assumed that $M \leq N$, so that each physical process is to be monitored by at least one sensor. $x^t$ is enabled to represent a hidden state of a physical process at a moment $t$, $z^t$ is enabled to represent a measurement value from a sensor at the moment t, and $u^t$ is enabled to represent a state of an actuator at the moment t. System dynamics can be represented by a nonlinear dynamic state-space model as follows:

$$x^t = f(x^{t-1}, u^{t-1}) + Q \ ;$$

$$z^t = h(x^t) + R \ ;$$

where $f(\ )$ is a nonlinear state transition or process function, which obtains a state of a physical process and a state of an actuator at a moment $t$ - $1$, and outputs an expected state of the physical process at the moment $t$; $Q$ is a covariance matrix of process noise; $h(\ )$ is a measurement function that maps a status of a physical process to a sensor measurement space; and R is a covariance matrix of sensor measurement noise.

$x^{t\text{-}1}$ and $p^{t\text{-}1}$ respectively represent a mean vector and a covariance matrix of a process state distribution at a moment $t$ - $1$, and the UKF may update $x^t$ and $p^t$ according to the following two steps.

A first step is a prediction step.

In the prediction step, a prior mean value and a covariance of a state distribution at a moment $t$ are calculated. First, a set of sigma points X and their corresponding weights $W^m$ and $W^c$ of the state distribution at a moment $t$ - $1$ are generated by using some sigma functions, for example, using Van der Merwe's scaled sigma point algorithm.

$$X, W^m, W^c = sigma\_function(x^{t-1}, P^{t-1}) \ .$$

The sigma points are skillfully selected, so that the state distribution is represented by only the several points. The selected sigma points are propagated by using the following process function $f(\ )$:

$$Y = f(X, u^{t-1}) \ .$$

A mean value and a covariance of a previous state distribution at the moment $t$ can be calculated by using an unscented transformation function in the following manners:

$$\overline{x}^t = \sum_i W_i^m Y_i \ ;$$

$$\overline{P}^t = \sum_i W_i^c (Y_i - \overline{x}^t)(Y_i - \overline{x}^t)^T + Q \ .$$

A second step is an update step.

In the update step, a posterior mean value and a covariance of the state distribution at the moment t, namely, $x^t$ and $p^t$ are calculated.

First, the prior sigma points are mapped to a measurement space by using a measurement function $h(\ )$:

$$L = h(Y) \ .$$

A mean value and a covariance of a measured sigma point are calculated by using the unscented transformation

function, where:

$$\boldsymbol{\mu} = \sum_i W_i^m L_i \; ;$$

$$\Sigma = \sum_i W_i^c (L_i - \boldsymbol{\mu})(L_i - \boldsymbol{\mu})^T + R \, .$$

A Kalman gain can be obtained by using the following formula:

$$K = [\sum_i W_i^c (Y_i - \overline{\boldsymbol{x}}^t)(L_i - \boldsymbol{\mu})^T] \Sigma^{-1} \, .$$

Then, an update may be performed as follows:

$$\boldsymbol{x}^t = \overline{\boldsymbol{x}}^t + K(\boldsymbol{z}^t - \boldsymbol{\mu})$$

$$P^t = \bar{P}^t - K \sum K^T \, .$$

Generally, functions $f(\ )$ and $h(\ )$ and noise matrices $Q$ and $R$ need to be manually specified for the design of a UKF, which requires designers to have professional knowledge, and reduces the usability of the UKF.

In the implementations of the present invention, a neural unscented Kalman filter (neural UKF) is proposed, where a state transition function is represented by a neural network, to capture nonlinear process dynamics in, for example, an ICS. In addition, the implementations of the present invention propose a method for learning a neural UKF from data instead of manually designing a UKF. In other words, a model parameter of a UKF (for example, a state transition function (namely, a neural network), a process noise matrix, and a measurement noise matrix) are all automatically learned from the data. Therefore, the implementations of the present invention not only significantly reduce a difficulty of using a UKF for status monitoring of an ICS, but also provide a technical solution for establishing an accurate status monitoring model.

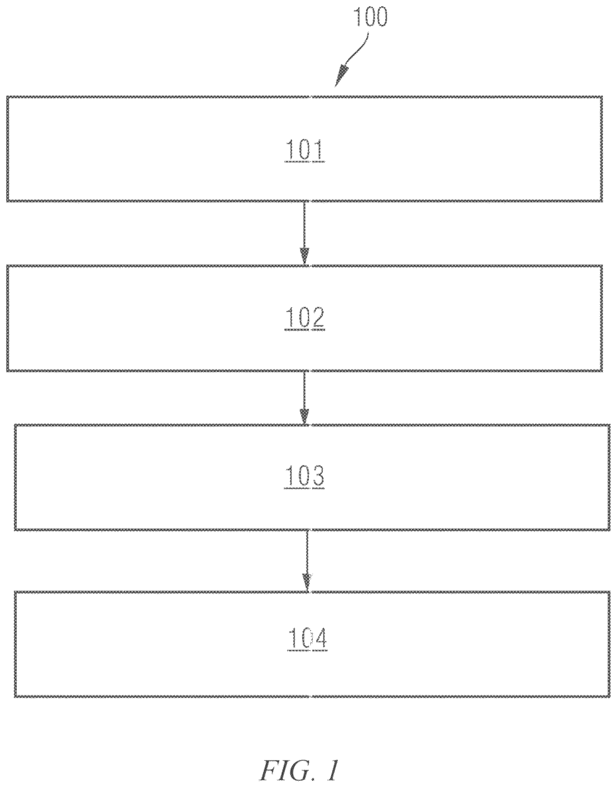

FIG. 1 is an exemplary flowchart of a method for determining a model parameter of a UKF according to an implementation of the present invention.

As shown in FIG. 1, the method includes:

step 101: obtaining detection data of a sensor;
step 102: determining a noise distribution of the sensor and denoised detection data based on the detection data;
step 103: training a neural network model based on the denoised detection data; and
step 104: determining the trained neural network model as a state transition function of the unscented Kalman filter.

It can be learned that, in this implementation of the present invention, there is no need to establish a mathematical model of process dynamics, a noise distribution of a sensor and denoised detection data are determined based on detection data of the sensor, and a neural network model specialized in capturing nonlinear process dynamics is trained based on the denoised detection data, so that a state transition function of a UKF can be automatically learned from the detection data, thereby improving the usability of the UKF.

The following case is considered: An actuator that performs a control action based on detection data of a sensor for a physical process is generally provided in many application environments (for example, an ICS). Preferably, in an implementation, status data of the actuator are further determined in step 101. Training the neural network model by using the denoised detection data as training data in step 103 includes: training the neural network model by using the denoised detection data and the status data as training data.

Therefore, the status data of the actuator is further obtained, and the neural network model is trained by further using the status data of the actuator as training data, so that the accuracy of the neural network model can be improved, which is especially applicable to an ICS generally including a sensor and an actuator.

The method further includes: determining, as a process noise matrix of the UKF, a distribution of a residual, between a predicted value of the sensor and a detection value of the sensor, output by the trained neural network model; and determining, as a measurement noise matrix of the UKF, a diagonal matrix formed by combination of variances of the noise distribution. Specifically, a covariance matrix of sensor measurement noise can be automatically generated by combining the variances of the noise distribution of the sensor that are determined in step 102 into the diagonal matrix.

It can be learned that, in this implementation of the present invention, the process noise matrix and the measurement noise matrix of the UKF are quickly calculated based on the noise distribution and the distribution of a residual, between a predicted value and a detection value, output by the trained neural network model, so that there is no need to manually specify the process noise matrix and the measurement noise matrix, thereby avoiding a dependence on professional knowledge and further improving the usability of the UKF.

Determining a noise distribution of the sensor and denoised detection data based on the detection data in step 102 includes: setting an original value of the denoised detection data; and performing an iterative calculation on the noise distribution of the sensor and the denoised detection data based on the original value of the denoised detection data and the detection data, where each iteration includes: determining a current iteration value of the noise distribution of the sensor based on a previous iteration value of the denoised detection data and the detection data; determining a current iteration value of the denoised detection data based on the current iteration value of the noise distribution of the sensor and the detection data; and updating the previous iteration value of the denoised detection data based on the current iteration value of the denoised detection data.

Therefore, in this implementation of the present invention, the noise distribution of the sensor and the denoised detection data can be quickly and accurately determined through iterative calculations.

A detailed algorithm for learning a UKF from data in this implementation of the present invention is described in detail below by using the application to an ICS as an example. The algorithm specifically includes the following steps.

Step 1 is data collection.

In the data collection step, an ICS may be enabled to operate at $T$ time steps, and then data $D^{\{1:T\}} = \{\boldsymbol{d}^1, \boldsymbol{d}^2, ..., \boldsymbol{d}^T\}$ is collected, where $\boldsymbol{d}^t = \{\boldsymbol{z}^t, \boldsymbol{u}^t\}$. It is assumed that there is no abnormal signal in the data $D^{\{1:T\}}$. In practice, the ICS may be enabled to operate in a "vacuum environment" (not accessible from a company network) for a period of time to collect $D^{\{1:T\}}$, to capture normal conditions of system operation.

Step 2 is learning measurement noise of a sensor.

Physical processes monitored by $n$ sensors are considered. $z_i^{\{1:T\}} = \{z_i^1, z_i^2, ... z_i^T\}$ is enabled to represent a collected measurement value of a sensor $i$, where $i=1:n$. $x^{\{1:T\}} = \{x^1, x^2, ..., x^T\}$ is enabled to represent a hidden state of a physical process. In addition, it is further assumed that $z_i^t = x^t + \epsilon_i$, where $\epsilon_i \sim \mathcal{N}(0, \sigma_i^2)$ represents zero-mean Gaussian noise with a variance of $\sigma_i^2$. For $i=1:n$, it is suggested to derive $\sigma_i^2$ from $z_i^{\{1:T\}}$ through maximum likelihood estimation.

Specifically, likelihood values of n sensor measurement values may be expressed as follows:

$$L = \prod_{t=1}^{T} \prod_{i=1}^{n} p(z_i^t | x^t, \sigma_i^2) = \prod_{t=1}^{T} \prod_{i=1}^{n} \frac{1}{\sigma_i \sqrt{2\pi}} e^{-\frac{1}{2}(\frac{z_i^t - x^t}{\sigma_i})^2} \propto \prod_{t=1}^{T} \prod_{i=1}^{n} \frac{1}{\sigma_i} e^{-\frac{1}{2}(\frac{z_i^t - x^t}{\sigma_i})^2}.$$

Then, if $c_i = \frac{1}{\sigma_i^2}$, the following is obtained:

$$L \propto \prod_{t=1}^{T} \prod_{i=1}^{n} c_i^{1/2} e^{-\frac{1}{2} c_i (z_i^t - x^t)^2}.$$

A negative log likelihood value is minimized to obtain:

$$\min_{c_{\{1:n\}}, x^{\{1:T\}}} NLL = -\log(L) \propto \sum_{t=1}^{T} \sum_{i=1}^{n} c_i (z_i^t - x^t)^2 - \log c_i$$

because there are two sets of parameters to be optimized, the optimization problem is solved by using a block coordinate descent method.

Specifically, the following can be obtained by letting $x^{\{1:T\}}$ be fixed:

$$\frac{\partial NLL}{\partial c_i} = 0 \rightarrow c_i = \frac{T}{\Sigma_1^T (z_i^t - x^t)^2}.$$

The following can be obtained by letting $c_{\{1:n\}}$ be fixed:

$$\frac{\partial NLL}{\partial x^t} = 0 \rightarrow x^t = \frac{\sum_1^n c_i z_i^t}{\sum_1^n c_i}.$$

The above steps are iteratively repeated until convergence is reached, so that a norm of a hidden state of a physical process between two consecutive iterations is less than a threshold, that is, the optimal $x^{\{1:T\}}$ and $c_{\{1:n\}}$ can be obtained by maximizing the likelihood values of the measurement values. After inferring sensor noise of all sensors in the system by using the above method, $R=\mathrm{diag}(\frac{1}{c_1}, \frac{1}{c_2}, \dots, \frac{1}{c_N})$ may be set, which means that the measurement noise of each sensor is independent.

In the above description, it is assumed that each physical process is monitored by a plurality of sensors. Although sensor redundancy is very common in an ICS, this implementation of the present invention can still be applied by constructing a virtual sensor for a physical process when the physical process is monitored by only one sensor.

In this implementation of the present invention, a virtual sensor can be constructed by using a random forest regressor. Specifically, to construct $k$ virtual sensors for a physical process monitored by a sensor $i$, $F_k(\ )$ is defined as a random forest regressor composed of $k$ decision trees. Then, the random forest regressor is trained, and the regressor uses a data set t $D^{\{1:T\}}$ to accept inputs $\boldsymbol{z}^t \backslash z_i^t$ and $u^t$ to predict $z_i^t$. After the random forest model is trained, each decision tree in the trained model can be regarded as a virtual sensor to obtain $k$ virtual sensors for the physical process.

Step 3 is learning a state transition function and a process noise matrix.

In the previous step, not only the sensor noise matrix $R$ is derived, the hidden state of the monitored physical process is also derived. $\boldsymbol{x}^{\{1:T\}} = \{\boldsymbol{x}^1, \boldsymbol{x}^2, \dots, \boldsymbol{x}^T\}$ is enabled to represent the derived hidden state of the physical process, a neural network model can be trained to capture the state transition function $f(\ )$. There are many options for the neural network model.

For example, two types of models: a feedforward neural network (FNN) model and a recurrent neural network (RNN) model may be considered:

$$FNN(\boldsymbol{x}^{t-1}, \boldsymbol{u}^{t-1}; \boldsymbol{\theta});$$

$$RNN(\boldsymbol{x}^{\{t-w:t-1\}}, \boldsymbol{u}^{\{t-w:t-1\}}; \boldsymbol{\theta});$$

Depending on a selected model, $\hat{\boldsymbol{x}}^t = FNN(\boldsymbol{x}^{t-1}, \boldsymbol{u}^{t-1}; \theta)$ or $RNN(\boldsymbol{x}^{\{t-w:t-1\}}, \boldsymbol{u}^{\{t-w:t-1\}}; \theta)$, and the following loss function can be optimized through back propagation:

$$\min_\theta \frac{1}{T} \sum_{t=2}^T (\boldsymbol{x}^t - \hat{\boldsymbol{x}}^t)^2.$$

After the neural network model is trained, the process noise matrix Q of t=1:T can be derived based on a statistical value of $\boldsymbol{x}^t$ - $\hat{\boldsymbol{x}}^t$.

Step 4 is specifying a measurement function.

The measurement function is relatively easy to specify, it merely maps a state of a physical process to a measurement space. In particular, if a process $j$ is monitored by the sensor $i$, $z_i^t = h(x_j^t)$.

Then, the neural UKF constructed based on the above model parameters can be applied to status monitoring.

In the monitoring phase, $\mu^t$ and $\Sigma^t$ are enabled to represent a mean value and a covariance of a measurement sigma point at the moment $t$, and when $\sqrt{(\boldsymbol{z}^t - \boldsymbol{\mu}^t)^T \Sigma^{t-1} (\boldsymbol{z}^t - \boldsymbol{\mu}^t)} > \tau$, an alarm is issued. This means that a Mahalanobis distance between an observed measurement value and the predicted distribution exceeds a predetermined threshold. A value of T can be adjusted by setting an acceptable false alarm rate by using the neural UKF for abnormal detection of the training data.

Based on the above description, an implementation of the present invention further proposes a system for determining a model parameter of a UKF.

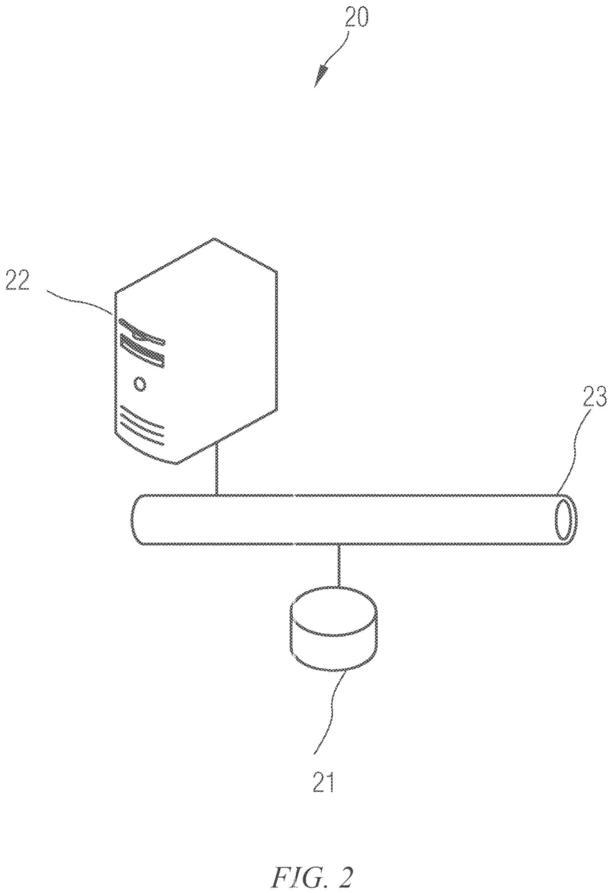

FIG. 2 is an exemplary structural diagram of a system for determining a model parameter of a UKF according to an implementation of the present invention.

As shown in FIG. 2, the system 20 includes:

a memory 21 configured to store detection data of a sensor for a physical quantity and status data of an actuator, where the actuator is adapted to perform an action based on an instruction related to the detection data; and

a processor 22 coupled with the memory 21 via a bus 23 and configured to: obtain the detection data and the status data from the memory 21; determine a noise distribution of the sensor and denoised detection data based on the detection data; train a neural network model by using the denoised detection data and the status data as training data; and determine the trained neural network model as a state transition function of the UKF.

The processor 22 is configured to: determine, as a process noise matrix of the UKF, a distribution of a residual, between a predicted value of the sensor and a detection value of the sensor, output by the trained neural network model; and determine, as a measurement noise matrix of the UKF, a diagonal matrix formed by combination of variances of the noise distribution.

In one implementation, the processor 22 is configured to: set an original value of the denoised detection data; and perform an iterative calculation on the noise distribution of the sensor and the denoised detection data based on the original value of the denoised detection data and the detection data, where each iteration includes: determining a current iteration value of the noise distribution of the sensor based on a previous iteration value of the denoised detection data and the detection data; determining a current iteration value of the denoised detection data based on the current iteration value of the noise distribution of the sensor and the detection data; and updating the previous iteration value of the denoised detection data based on the current iteration value of the denoised detection data.

In the system 20 shown in FIG. 2, the model parameter of the UKF is determined based on the detection data of the sensor and the status data of the actuator that are stored in the memory 21, and the UKF is subsequently determined based on the model parameter of the UKF. Therefore, the system 20 can generate the UKF based on historical data in the memory 21. The model parameter of the UKF may also be determined based on real-time detection data obtained by real-time detection and real-time status data of the actuator, and the UKF is determined based on the model parameter of the UKF.

The UKF according to this implementation of the present invention may be applied to various application environments, such as an ICS. An ICS includes integrated hardware and software components designed to monitor and control industrial processes and is generally deployed in critical infrastructure, such as water treatment plants, the grid, and natural gas pipelines. Unlike a conventional IT system, consequences of the ICS deviating from normal operation may cause significant physical damage to devices, the environment, and even human life. Active monitoring on a physical status necessary for normal operation of the ICS is crucial for improving the security and reliability of such a system, and can implement early detection on an abnormal state of the system, so that mitigation measures such as fault diagnosis and system shutdown can be taken in a timely manner.

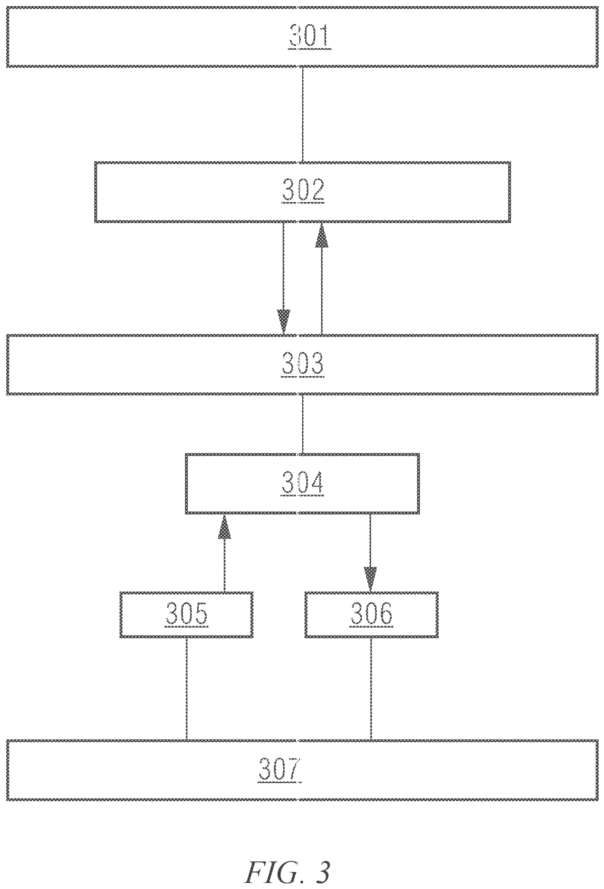

FIG. 3 is an exemplary structural diagram of an ICS according to one implementation of the present invention. FIG. 3 illustrates a system architecture of a general ICS, which includes a physical layer 307, a control layer 303, and a supervisory control layer 301. Field devices such as a sensor 305 and an actuator 306 in the physical layer 307 report and modify a status of a physical process based on signals sent and received by a programmable logic controller (PLC) and a remote terminal unit (RTU) 304 located in the control layer 303.

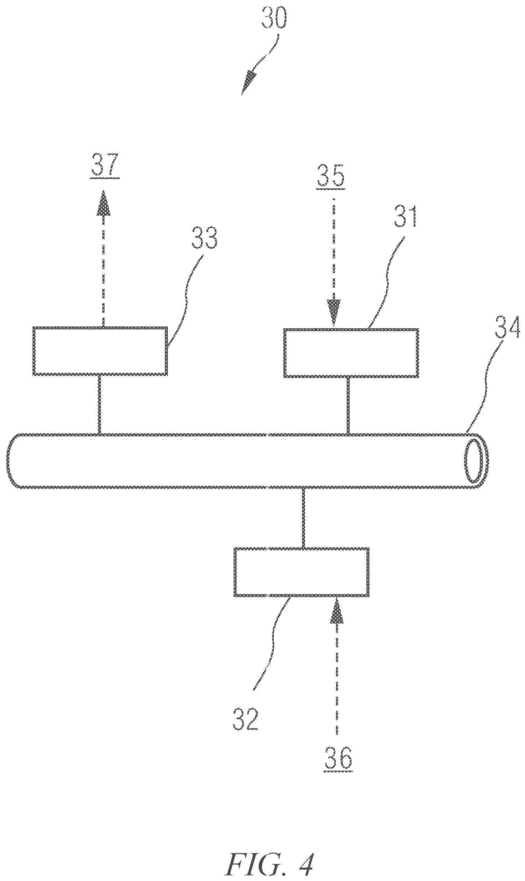

FIG. 4 is an exemplary schematic diagram of an ICS including a UKF according to one implementation of the present invention. In FIG. 4, an ICS 30 includes:

a first interface 31 coupled with a sensor;

a second interface 32 coupled with an actuator; and

a UKF 33 configured to obtain detection data 35 from the sensor via a bus 34 through the first interface 31 and obtain the status data 36 from the actuator via the bus 34 through the second interface 32; and generate denoised detection data 37 based on the detection data 35 and the status data 36, where the UKF 33 determines a model parameter by applying any one of the above methods.

An application process of the UKF according to this implementation of the present invention is described below by using a water distribution system as an example.

In the water distribution system, a control layer 303 obtains data from a sensor 305 (such as a water level sensor, a flowmeter, and a water quality sensor) . The control layer 303 sends, based on the data received from the sensor 305, a command to an actuator 306, to perform a specific action, for example, switching a pump on or off and opening or closing a valve. A supervisory control layer 301 includes a data collection and supervisory control system (SCADA), a human-machine interaction interface (HMI), an engineering workstation, and a data history recorder component 302. They directly communicate with the control layer 303 to provide higher-level supervisory monitoring and control functions, and may be further connected to a more broad company system and network through a "demilitarized zone" not shown in FIG. 3. Status monitoring mechanisms are generally deployed in this layer, and in the control layer 303, a sensor measurement value and an actuator status are continuously checked to ensure that the physical process is in a state of control.

A typical application of this implementation of the present invention is described below, for example, a status monitoring test of a water treatment plant. The neural UKF proposed in the implementations of the present invention is used for abnormal detection of public ICS data logs collected from a secure water treatment (SWaT) testbed.

Specifically, the SWaT testbed is a scaled-down water treatment plant with six-stage filtration technology for purifying raw water. 6 PLCs are deployed and work together with 24 sensors and 27 actuators to control the whole process. SWaT data logs are collected in the following manner: The SWaT is enabled to operate from an idle state to a full operation state without interruption for 11 days in total. During the first 7 days, the device operates under normal conditions, that is, free from any attacks. During the remaining 4 days, 36 different types of attacks were launched on the SWaT test platform, including single stage single point attacks, single stage multi-point attacks, multi-stage single point attacks, and multi-stage multi-point attacks against the water treatment process. A data set includes all sensor values and actuator values collected every second within the duration. Each data point includes 53 attributes, 24 of which are consecutive sensor readings and 27 are discrete actuator states. Without any prior knowledge of the system dynamics of the SWaT, the data logs (downsampling to a data point every 10 seconds) of the first 7 days are used, the neural UKF is learned using the method in the implementations of the present invention, and then the learned neural UKF detects an abnormal process state under attacks in the data logs of the remaining 4 days.

Specifically, an FNN and an RNN (implemented as LSTM networks) are considered to be used as state transition functions. Two residual-based abnormal detection models, respectively based on the FNN and the RNN, having the same structure as a prediction model are used as reference models.

The following four models used for abnormal detection are used first to show a true positive rate (TPR), where a false positive rate (FPR) varies from 0 to 0.1 (a ROC curve).

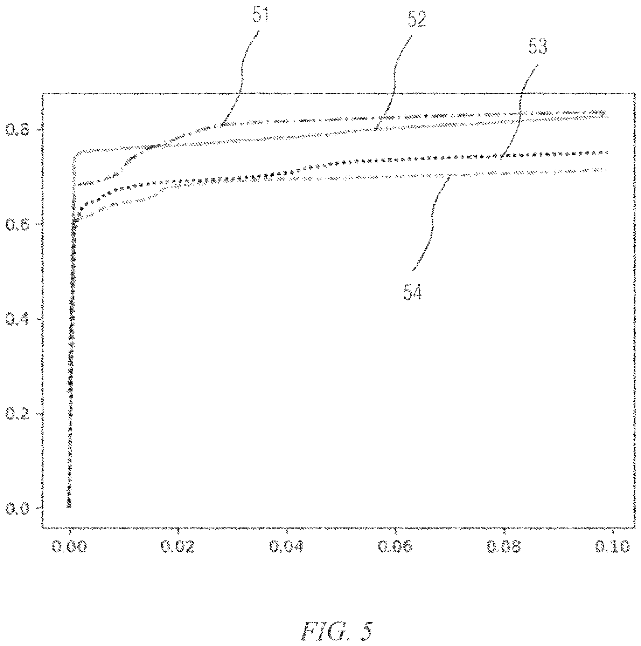

FIG. 5 is a first diagram showing a comparison between a simulation effect in the prior art and an effect according to an implementation of the present invention.

In FIG. 5, the abscissa represents a false positive rate (FPR), and the ordinate represents a true positive rate (TPR). The curve 51 is a simulation curve of a UKF based on an RNN proposed in an implementation of the present invention. The curve 52 is a simulation curve of a UKF based on an FNN proposed in an implementation of the present invention. The curve 53 is a simulation curve of a model based on an RNN residual in the prior art. The curve 54 is a simulation curve of a model based on an FNN residual in the prior art.

It can be seen from FIG. 5 (an ROC curve) that the FNN-neural UKF and RNN-neural UKF can achieve a higher TPR compared with the detection models based on FNN and RNN residuals. In addition, if a TPR for a specific attack type is greater than 0.1, it is considered that the attack type can be detected.

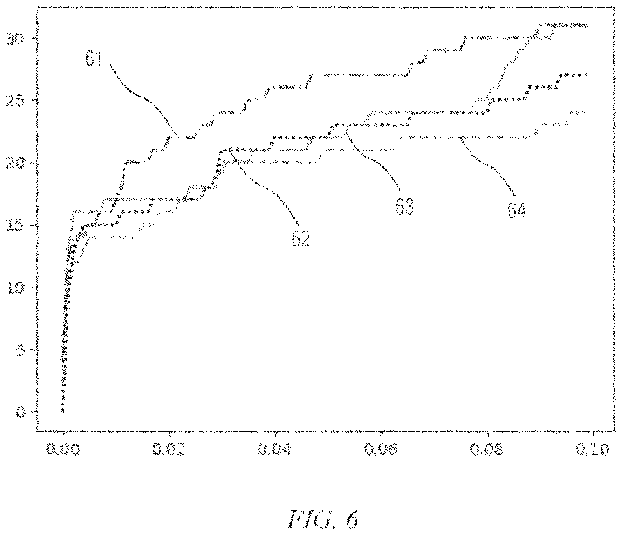

FIG. 6 is a second diagram showing a comparison between a simulation effect in the prior art and an effect according to an implementation of the present invention. FIG. 6 shows the numbers of attack types that can be detected by using various methods under different FPR conditions.

In FIG. 6, the abscissa represents a false positive rate, and the ordinate represents the number of attack types detected. The curve 61 is a UKF based on an RNN proposed in an implementation of the present invention. The curve 62 is a simulation curve of a model based on an RNN residual in the prior art. The curve 63 is a simulation curve of a UKF based on an FNN proposed in an implementation of the present invention. The curve 64 is a simulation curve of a model based on an FNN residual in the prior art.

It can be seen from FIG. 6 that more attack types can be detected by using the neural UKF compared with the residual-based models. Tests show that, compared with a commonly used method based on residual errors, this implementation of the present invention can detect abnormal behavior more accurately.

Therefore, compared with a residual error-based method for status monitoring of an ICS directly based on noise sensor measurement, this implementation of the present invention uses the UKF algorithm to monitor a hidden state of a physical process, which can detect abnormal behavior more accurately. Moreover, the implementations of the present invention propose a method for automatic learning of a UKF from data, rather than manually designing a UKF that requires a high level of system knowledge and mathematical professional knowledge, thereby significantly reducing the difficulty of performing status monitoring by applying the UKF in practice. Further, the implementations of the present invention use the neural network to capture a state transition function in the UKF. This enables the neural UKF to monitor the ICS with highly nonlinear system dynamics compared to conventional Kalman filtering-based algorithms.

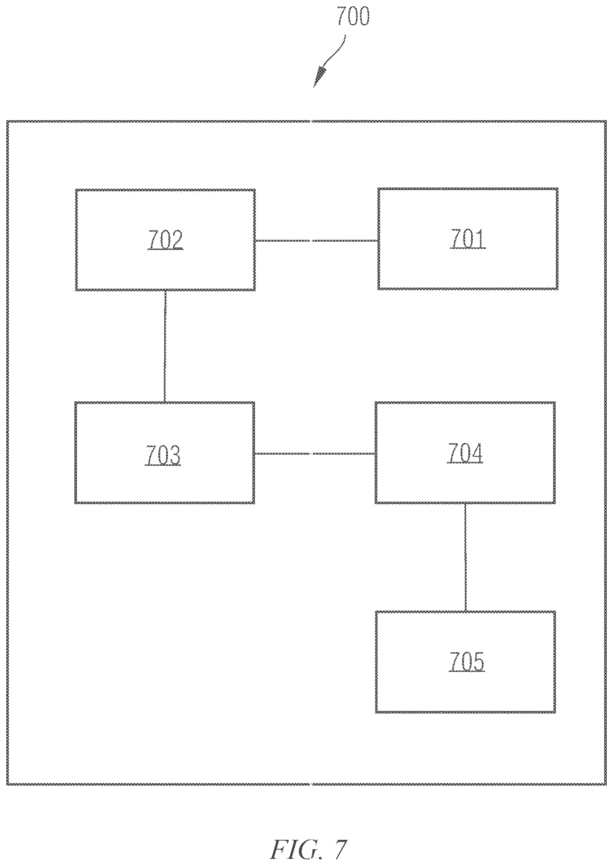

Based on the above description, an implementation of the present invention further proposes an apparatus for determining a model parameter of a UKF. FIG. 7 is a first exemplary structural diagram of an apparatus for determining a model parameter of a UKF according to an implementation of the present invention.

As shown in FIG. 7, the apparatus 700 for determining a model parameter of a UKF includes:

a data obtaining module 701 configured to obtain detection data of a sensor;

a first determining module 702 configured to determine a noise distribution of the sensor and denoised detection data based on the detection data;

a training module 703 configured to train a neural network model based on the denoised detection data; and

a second determining module 704 configured to determine the trained neural network model as a state transition function of the UKF.

In an implementation, the apparatus further includes a third determining module 705 configured to determine, as a process noise matrix of the UKF, a distribution of a residual, between a predicted value of the sensor and a detection value of the sensor, output by the trained neural network model; determine, as a measurement noise matrix of the UKF, a diagonal matrix formed by a combination of variances of the noise distribution.

The first determining module 702 is configured to set an original value of the denoised detection data, perform an iterative calculation on the noise distribution of the sensor and the denoised detection data based on the original value of the denoised detection data and the detection data, where each iteration includes: determining a current iteration value of the noise distribution of the sensor based on a previous iteration value of the denoised detection data and the detection data; determining a current iteration value of the denoised detection data based on the current iteration value of the noise distribution of the sensor and the detection data; and updating the previous iteration value of the denoised detection data based on the current iteration value of the denoised detection data.

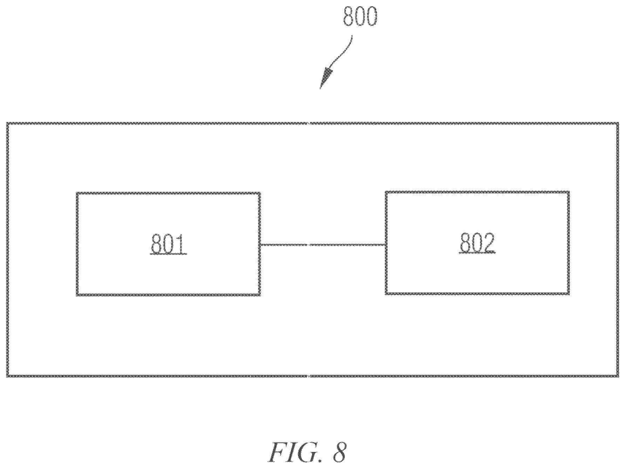

In an implementation, the data obtaining module 701 is further configured to obtain status data of an actuator. The training module 703 is configured to train the neural network model by using the denoised detection data and the status data as training data. FIG. 8 is a second exemplary structural diagram of an apparatus for determining a model parameter of a UKF according to an implementation of the present invention.

In FIG. 8, the apparatus 800 for determining a model parameter of a UKF includes a memory 802 and a processor 801. The memory 802 stores an application program executable by the processor 801 that is used to cause the processor 801 to perform the method for determining a model parameter of an unscented Kalman filter according to any one of the above.

It should be noted that not all the steps and modules in the flows and structural diagrams described above are necessary, and some steps or modules may be omitted according to practical requirements. The execution sequence of the steps is not fixed and may be adjusted according to requirements. The division of the modules is merely function division adopted for ease of description. In an actual implementation, one module may be implemented by a plurality of modules, respectively, and functions of a plurality of modules may also be implemented by the same module. These modules may be located in the same device, or may be located in different devices.

A hardware module in each implementation may be realized in a mechanical manner or electrical manner. For example, a hardware module may comprise a specially designed permanent circuit or logic device (e.g., a dedicated processor, such as FPGA or ASIC) for completing a specific operation. The hardware module may also comprise a programmable logic device or circuit (such as comprising a general processor or other programmable processors) temporarily configured by software for performing certain operations. Whether the hardware module is implemented in a mechanical manner, by using a dedicated permanent circuit, or by using a temporarily configured circuit (for example, configured by software) may be determined based on costs and time.

The present invention also provides a machine-readable storage medium which stores instructions for causing a machine to perform the method as described herein. Specifically, a system or an apparatus with a storage medium may be provided, where software program codes for implementing the functions of any one of the implementations in the above embodiments are stored on the storage medium, and a computer (or a CPU or an MPU) of the system or apparatus is caused to read out and execute the program codes stored in the storage medium. In addition, some or all of the actual operations can be performed by an operating system worked on a computer with instructions based on program codes. The program codes read from the storage medium also can be written into a memory provided in an extension board inserted inside the computer or into a memory provided in an extension unit connected to the computer, subsequently the instructions based on the program codes cause the CPU mounted on the extension board or the extension unit to perform part of or all of the practical operations, thereby realizing the function of any one of the above-mentioned implementations. The implementations of the storage medium for providing program codes include a floppy disk, a hard disk, a magnetic optical disk, an optical disk (such as CD-ROM, CD-R, CD-RW, DVD-ROM, DVD-RAM, DVD-RW, and DVD+RW), a magnetic tape, a non-volatility memory card, and a ROM. Optionally, the program code may be downloaded from a server computer or a cloud via a communication network.

**Claims**

1. A computer implemented method (100) for determining a model parameter of a neural unscented Kalman filter and for using it to decide whether to trigger an alarm, the method comprising:

obtaining (101) detection data of a sensor;

determining (102) a noise distribution of the sensor and denoised detection data based on the detection data, wherein determining (102) a noise distribution of the sensor and denoised detection data based on the detection data comprises:

setting an original value of the denoised detection data; and

performing an iterative calculation on the noise distribution of the sensor and the denoised detection data based on the original value of the denoised detection data and the detection data, wherein each iteration comprises:

determining a current iteration value of the noise distribution of the sensor based on a previous iteration value of the denoised detection data and the detection data;

determining a current iteration value of the denoised detection data based on the current iteration value of the noise distribution of the sensor and the detection data; and

updating the previous iteration value of the denoised detection data based on the current iteration

value of the denoised detection data;

training (103) a neural network model based on the denoised detection data;

determining (104) the trained neural network model as representing a nonlinear state transition function of the neural unscented Kalman filter;

determining, as a process noise matrix of the neural unscented Kalman filter, a distribution of a residual, between a predicted value of the sensor and a detection value of the sensor, output by the trained neural network model; and

determining, as a measurement noise matrix of the neural unscented Kalman filter, a diagonal matrix formed by arrangement of variances of the noise distribution;

wherein the neural network model is configured to predict a sensor measurement value within each time step based on a previous sensor measurement value;

wherein the method further comprises triggering an alarm if a residual error between a predicted sensor measurement value and an observed sensor value exceeds a preset threshold.

2. The method (100) as claimed in claim 1, wherein the method is applied to an industrial control system comprising an actuator, and further comprises:

obtaining status data of the actuator in the industrial control system; and

training (103) a neural network model based on the denoised detection data comprises: training (103) the neural network model by using the denoised detection data and the status data as training data.

3. An apparatus (700) for determining a model parameter of a neural unscented Kalman filter and for using it to decide whether to trigger

an alarm, wherein the apparatus comprises:

a data obtaining module (701) configured to obtain detection data of a sensor;

a first determining module (702) configured to determine a noise distribution of the sensor and denoised detection data based on the detection data, wherein the first determining module (702) is configured to set an original value of the denoised detection data; and perform an iterative calculation on the noise distribution of the sensor and the denoised detection data based on the original value of the denoised detection data and the detection data, wherein each iteration comprises: determining a current iteration value of the noise distribution of the sensor based on a previous iteration value of the denoised detection data and the detection data; determining a current iteration value of the denoised detection data based on the current iteration value of the noise distribution of the sensor and the detection data; and updating the previous iteration value of the denoised detection data based on the current iteration value of the denoised detection data;

a training module (703) configured to train a neural network model based on the denoised detection data;

a second determining module (704) configured to determine the trained neural network model as representing a nonlinear state transition function of the neural unscented Kalman filter; and

a third determining module (705) configured to determine, as a process noise matrix of the neural unscented Kalman filter, a distribution of a residual, between a predicted value of the sensor and a detection value of the sensor, output by the trained neural network model; and determine, as a measurement noise matrix of the neural unscented Kalman filter, a diagonal matrix formed by an arrangement of variances of the noise distribution; wherein the neural network model is configured to predict a sensor measurement value within each time step based on a previous sensor measurement value;

wherein the apparatus is further configured for triggering an alarm if a residual error between a predicted sensor measurement value and an observed sensor value exceeds a preset threshold.

4. The apparatus (700) as claimed in claim 3, wherein the apparatus (700) is applied to an industrial control system comprising an actuator, wherein

the data obtaining module (701) is further configured to obtain status data of the actuator in the industrial control system; and the training module (703) is configured to train the neural network model by using the denoised detection data and the status data as training data.

5. An industrial control system (30), comprising:

a first interface (31) coupled with a sensor;
a second interface (32) coupled with an actuator; and
an apparatus according to claim 3-4 configured to obtain detection data (35) from the sensor through the first interface (31) and obtain the status data (36) from the actuator through the second interface (32).

6. A computer-readable storage medium storing computer-readable instructions which, when executed by a computer, cause the computer to carry out the steps of the method (100) as claimed in any one of claims 1 to 2.

**Patentansprüche**

1. Computerimplementiertes Verfahren (100) zum Ermitteln eines Modellparameters eines neuronalen Unscented-Kalman-Filters und zum Verwenden desselben, um zu entscheiden, ob ein Alarm ausgelöst werden soll, wobei das Verfahren umfasst:

Erhalten (101) von Erkennungsdaten eines Sensors;
Ermitteln (102) einer Rauschverteilung des Sensors und von entrauschten Erkennungsdaten basierend auf den Erkennungsdaten, wobei das Ermitteln (102) einer Rauschverteilung des Sensors und von entrauschten Erkennungsdaten basierend auf den Erkennungsdaten umfasst:

Einstellen eines Originalwerts der entrauschten Erkennungsdaten; und
Durchführen einer iterativen Berechnung der Rauschverteilung des Sensors und der entrauschten Erkennungsdaten basierend auf dem Originalwert der entrauschten Erkennungsdaten und den Erkennungsdaten, wobei jede Iteration umfasst:

Ermitteln eines aktuellen Iterationswerts der Rauschverteilung des Sensors basierend auf einem vorherigen Iterationswert der entrauschten Erkennungsdaten und den Erkennungsdaten;
Ermitteln eines aktuellen Iterationswerts der entrauschten Erkennungsdaten basierend auf dem aktuellen Iterationswert der Rauschverteilung des Sensors und den Erkennungsdaten; und
Aktualisieren des vorherigen Iterationswerts der entrauschten Erkennungsdaten basierend auf dem aktuellen Iterationswert der entrauschten Erkennungsdaten;
Trainieren (103) eines neuronalen Netzwerkmodells basierend auf den entrauschten Erkennungsdaten;
Ermitteln (104) des trainierten neuronalen Netzwerkmodells, das eine nichtlineare Zustandsübergangsfunktion des neuronalen Unscented-Kalman-Filters repräsentiert;
Ermitteln, als eine Prozessrauschmatrix des neuronalen Unscented-Kalman-Filters, einer Verteilung einer Restgröße zwischen einem vorhergesagten Wert des Sensors und einem Erkennungswert des Sensors, der von dem trainierten neuronalen Netzwerkmodell ausgegeben wird; und
Ermitteln, als eine Messrauschmatrix des neuronalen Unscented-Kalman-Filters, einer Diagonalmatrix, die durch eine Anordnung von Varianzen der Rauschverteilung gebildet wird;
wobei das neuronale Netzwerkmodell konfiguriert ist zum Vorhersagen eines Sensormesswerts innerhalb jedes Zeitschritts basierend auf einem vorherigen Sensormesswert;
wobei das Verfahren ferner ein Auslösen eines Alarms umfasst, wenn ein Restgrößenfehler zwischen einem vorhergesagten Sensormesswert und einem beobachteten Sensorwert einen voreingestellten Schwellenwert überschreitet.

2. Verfahren (100) nach Anspruch 1, wobei das Verfahren auf ein industrielles Steuersystem angewandt wird, das ein Stellglied umfasst, und ferner umfasst:

Erhalten von Zustandsdaten des Stellglieds in dem industriellen Steuersystem; und
wobei das Trainieren (103) eines neuronalen Netzwerkmodells basierend auf den entrauschten Erkennungsdaten umfasst: Trainieren (103) des neuronalen Netzwerkmodells unter Verwendung der entrauschten Erkennungsdaten und der Zustandsdaten als Trainingsdaten.

3. Vorrichtung (700) zum Ermitteln eines Modellparameters eines neuronalen Unscented-Kalman-Filters und zum Verwenden desselben, um zu entscheiden, ob ein Alarm ausgelöst werden soll, wobei die Vorrichtung umfasst:

ein Datenbeschaffungsmodul (701), das konfiguriert ist zum Erhalten von Erkennungsdaten eines Sensors;
ein erstes Ermittlungsmodul (702), das konfiguriert ist zum: Ermitteln einer Rauschverteilung des Sensors und von entrauschten Erkennungsdaten basierend auf den Erkennungsdaten, wobei das erste Ermittlungsmodul (702) konfiguriert ist zum Einstellen eines Originalwerts der entrauschten Erkennungsdaten; und Durchführen einer iterativen Berechnung der Rauschverteilung des Sensors und der entrauschten Erkennungsdaten basierend auf dem Originalwert der entrauschten Erkennungsdaten und den Erkennungsdaten, wobei jede Iteration umfasst: Ermitteln eines aktuellen Iterationswerts der Rauschverteilung des Sensors basierend auf einem vorherigen Iterationswert der entrauschten Erkennungsdaten und den Erkennungsdaten; Ermitteln eines aktuellen Iterationswerts der entrauschten Erkennungsdaten basierend auf dem aktuellen Iterationswert der Rauschverteilung des Sensors und den Erkennungsdaten; und Aktualisieren des vorherigen Iterationswerts der entrauschten Erkennungsdaten basierend auf dem aktuellen Iterationswert der entrauschten Erkennungsdaten;
ein Trainingsmodul (703), das konfiguriert ist zum Trainieren eines neuronalen Netzwerkmodells basierend auf den entrauschten Erkennungsdaten;
ein zweites Ermittlungsmodul (704), das konfiguriert ist zum Ermitteln des trainierten neuronalen Netzwerkmodells, das eine nichtlineare Zustandsübergangsfunktion des neuronalen Unscented-Kalman-Filters repräsentiert; und
ein drittes Ermittlungsmodul (705), das konfiguriert ist zum: Ermitteln, als eine Prozessrauschmatrix des neuronalen Unscented-Kalman-Filters, einer Verteilung einer Restgröße zwischen einem vorhergesagten Wert des Sensors und einem Erkennungswert des Sensors, der von dem trainierten neuronalen Netzwerkmodell ausgegeben wird; und Ermitteln, als eine Messrauschmatrix des neuronalen Unscented-Kalman-Filters, einer Diagonalmatrix, die durch eine Anordnung von Varianzen der Rauschverteilung gebildet wird;
wobei das neuronale Netzwerkmodell konfiguriert ist zum Vorhersagen eines Sensormesswerts innerhalb jedes Zeitschritts basierend auf einem vorherigen Sensormesswert;
wobei die Vorrichtung ferner konfiguriert ist zum Auslösen eines Alarms, wenn ein Restgrößenfehler zwischen einem vorhergesagten Sensormesswert und einem beobachteten Sensorwert einen voreingestellten Schwellenwert überschreitet.

4. Vorrichtung (700) nach Anspruch 3, wobei die Vorrichtung (700) auf ein industrielles Steuersystem angewandt wird, das ein Stellglied umfasst, wobei
das Datenbeschaffungsmodul (701) ferner konfiguriert ist zum Erhalten von Zustandsdaten des Stellglieds in dem industriellen Steuersystem; und das Trainingsmodul (703) konfiguriert ist zum Trainieren des neuronalen Netzwerkmodells unter Verwendung der entrauschten Erkennungsdaten und der Zustandsdaten als Trainingsdaten.

5. Industrielles Steuersystem (30), umfassend:

eine erste Schnittstelle (31), die mit einem Sensor gekoppelt ist;
eine zweite Schnittstelle (32), die mit einem Stellglied gekoppelt ist; und
eine Vorrichtung nach einem der Ansprüche 3 bis 4, die konfiguriert ist zum Erhalten, durch die erste Schnittstelle (31), von Erkennungsdaten (35) von dem Sensor und zum Erhalten, durch die zweite Schnittstelle (32), der Zustandsdaten (36) von dem Stellglied.

6. Computerlesbares Speichermedium, in dem computerlesbare Anweisungen gespeichert sind, die, wenn sie von einem Computer ausgeführt werden, den Computer veranlassen, das Verfahren (100) nach einem der Ansprüche 1 bis 2 durchzuführen.

**Revendications**

1.  Procédé (100) mis en œuvre par ordinateur pour déterminer un paramètre de modèle d'un filtre de Kalman neuronal non parfumé et pour décider s'il faut déclencher une alarme, le procédé comprenant :

    l'obtention (101) de données de détection d'un capteur ;
    la détermination (102) d'une distribution de bruit du capteur et de données de détection débruitées d'après les données de détection, la détermination (102) d'une distribution de bruit du capteur et de données de détection débruitées d'après les données de détection comprenant :

    la spécification d'une valeur d'origine des données de détection débruitées ; et
    la réalisation d'un calcul itératif sur la distribution de bruit du capteur et les données de détection débruitées sur la base de la valeur d'origine des données de détection débruitées et des données de détection, chaque itération comprenant :

    la détermination d'une valeur d'itération courante de la distribution de bruit du capteur sur la base d'une valeur d'itération précédente des données de détection débruitées et
    des données de détection ;
    la détermination d'une valeur d'itération courante des données de détection débruitées sur la base de la valeur d'itération courante de la distribution de bruit du capteur et des données de détection ; et
    la mise à jour la valeur d'itération précédente des données de détection débruitées sur la base de la valeur d'itération courante des données de détection débruitées ;
    l'entraînement (103) d'un modèle de réseau neuronal d'après les données de détection débruitées ;
    la détermination (104) du modèle de réseau neuronal entraîné comme représentant une fonction non linéaire de transition d'état du filtre de Kalman neuronal non parfumé ;
    la détermination, en tant que matrice de bruit de processus du filtre de Kalman neuronal non parfumé, d'une distribution d'un résidu, entre une valeur prédite du capteur et une valeur de détection du capteur, délivrée par le modèle de réseau neuronal entrainé, et
    la détermination, en tant que matrice de bruit de mesure du filtre de Kalman neuronal non parfumé, d'une matrice diagonale formée par agencement de variances de la distribution de bruit ;
    le modèle de réseau neuronal étant configuré pour prédire une valeur de mesure de capteur à chaque pas de temps sur la base d'une valeur précédente de mesure de capteur ;
    le procédé comprenant en outre le déclenchement d'une alarme si une erreur résiduelle entre une valeur de mesure de capteur prédite et une valeur de capteur observée dépasse un seuil prédéfini.

2.  Procédé (100) selon la revendication 1, le procédé étant appliqué à un système industriel de commande comprenant un actionneur, et comprenant en outre :

    l'obtention de données d'état de l'actionneur dans le système industriel de commande ; et
    l'entraînement (103) d'un modèle de réseau neuronal d'après les données de détection débruitées comprenant :
    l'entraînement (103) du modèle de réseau neuronal en utilisant les données de détection débruitées et les données d'état comme données d'apprentissage.

3.  Appareil (700) destiné à déterminer un paramètre de modèle d'un filtre de Kalman neuronal non parfumé et à l'utiliser pour décider s'il faut déclencher une alarme, l'appareil comprenant :

    un module (701) d'obtention de données configuré pour obtenir des données de détection d'un capteur ;
    un premier module (702) de détermination configuré pour déterminer une distribution de bruit du capteur et des données de détection débruitées d'après les données de détection, le premier module (702) de détermination étant configuré pour spécifier une valeur d'origine des données de détection débruitées ; et effectuer un calcul itératif sur la distribution de bruit du capteur et les données de détection débruitées sur la base de la valeur d'origine des données de détection débruitées et des données de détection, chaque itération comprenant : la détermination d'une valeur d'itération courante de la distribution de bruit du capteur sur la base d'une valeur d'itération précédente des données de détection débruitées et
    des données de détection ; la détermination d'une valeur d'itération courante des données de détection débruitées sur la base de la valeur d'itération courante de la distribution de bruit du capteur et des données de détection ; et la mise à jour de la valeur d'itération précédente des données de détection débruitées sur la base de la valeur d'itération courante des données de détection débruitées ;

un module (703) d'apprentissage configuré pour entraîner un modèle de réseau neuronal d'après les données de détection débruitées ;

un deuxième module (704) de détermination configuré pour déterminer le modèle de réseau neuronal entraîné comme représentant une fonction non linéaire de transition d'état du filtre de Kalman neuronal non parfumé ; et

un troisième module (705) de détermination configuré pour déterminer, en tant que matrice de bruit de processus du filtre de Kalman neuronal non parfumé, une distribution d'un résidu, entre une valeur prédite du capteur et une valeur de détection du capteur, délivrée par le modèle de réseau neuronal entrainé ; et déterminer, en tant que matrice de bruit de mesure du filtre de Kalman neuronal non parfumé, une matrice diagonale formée par un agencement de variances de la distribution de bruit ;

le modèle de réseau neuronal étant configuré pour prédire une valeur de mesure de capteur à chaque pas de temps sur la base d'une valeur précédente de mesure de capteur ;

l'appareil étant en outre configuré pour déclencher une alarme si une erreur résiduelle entre une valeur de mesure de capteur prédite et une valeur de capteur observée dépasse un seuil prédéfini.

4. Appareil (700) selon la revendication 3, l'appareil (700) étant appliqué à un système industriel de commande comprenant un actionneur,

le module (701) d'obtention de données étant en outre configuré pour obtenir des données d'état de l'actionneur dans le système industriel de commande ; et le module (703) d'apprentissage étant configuré pour entraîner le modèle de réseau neuronal en utilisant les données de détection débruitées et les données d'état comme données d'apprentissage.

5. Système industriel (30) de commande, comprenant :

une première interface (31) couplée à un capteur ;

une deuxième interface (32) couplée à un actionneur ; et

un appareil selon la revendication 3 à 4, configuré pour obtenir des données (35) de détection à partir du capteur par l'intermédiaire de la première interface (31) et obtenir les données (36) d'état à partir de l'actionneur par l'intermédiaire de la seconde interface (32).

6. Support de stockage lisible par ordinateur conservant des instructions lisibles par ordinateur qui, lorsqu'elles sont exécutées par un ordinateur, amènent l'ordinateur à réaliser les étapes du procédé (100) selon l'une quelconque des revendications 1 à 2.

100

101

102

103

104

*FIG. 1*

FIG. 2

*FIG. 3*

*FIG. 4*

*FIG. 5*

*FIG. 6*

*FIG. 7*

800

801

802

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108682023 A